# EUROPEAN PATENT APPLICATION

(11) **EP 4 579 478 A1**
(43) Date of publication of application: **02.07.2025**
(21) Application number: 23864434.8
(22) Date of filing: 29.06.2023
(51) Int. Cl.: G06F 16/22

(54) **METHOD FOR CREATING INDEX, AND DATABASE SYSTEM**

(30) Priority: 15.09.2022 CN 202211120347; 01.11.2022 CN 202211358798
(71) Applicant: Huawei Cloud Computing Technologies Co., Ltd., Guiyang, Guizhou 550025 (CN)
(72) Inventor: SU, Bin, Guiyang, Guizhou 550025 (CN); FENG, Xiaokang, Guiyang, Guizhou 550025 (CN); ZHU, Qingping, Guiyang, Guizhou 550025 (CN)
(74) Representative: Goddar, Heinz J.
(86) International application number: PCT/CN2023/103975
(87) International publication number: WO 2024/055695

(57) **Abstract**

This application discloses an index creation method and a database system, and belongs to the field of database technologies. The database system includes a computing node and a storage node. The storage node stores a data table, and the data table records a plurality of rows and a plurality of columns of data. In the database system, the storage node is configured to determine indication information of target data required for creating an index. The target data is partial data in a target data table. The storage node is further configured to: obtain the target data from the target data table based on the indication information, and provide the target data for the computing node. The computing node is configured to create the index based on the target data. This application helps improve index creation efficiency.

## Description

This application claims priorities to Chinese Patent Application No. 202211120347.0, filed on September 15, 2022 and entitled "INDEX CREATION METHOD AND APPARATUS", and to Chinese Patent Application No. 202211358798.8, filed on November 1, 2022 and entitled "INDEX CREATION METHOD AND DATABASE SYSTEM", both of which are incorporated herein by reference in their entireties.

### TECHNICAL FIELD

This application relates to the field of database technologies, and in particular, to an index creation method and a database system.

### BACKGROUND

Creating an index for data in a database is a common database definition language (data definition language, DDL) operation and is a common operation during operations and maintenance of a database system. Index-based query can speed up query and improves query performance, and is widely used in a scenario in which a user needs to speed up query.

In a current database system, when creating an index for a data table in a database, a computing node needs to read all data in the data table from a storage node, and then create the index based on all the data in the data table.

However, current index creation efficiency is low.

### SUMMARY

This application provides an index creation method and a database system. This application helps improve index creation efficiency. Technical solutions provided in this application are as follows:
According to a first aspect, this application provides a database system. The database system includes a computing node and a storage node. The storage node stores a data table, and the data table records a plurality of rows and a plurality of columns of data. In the database system, the storage node is configured to determine indication information of target data required for creating an index. The target data is partial data in a target data table. The storage node is further configured to: obtain the target data from the target data table based on the indication information, and provide the target data for the computing node. The computing node is configured to create the index based on the target data.

In the database system, the storage node obtains, from the target data table, the target data required for creating the index, and provides the target data for the computing node. Compared with a related technology, in the database system, the storage node does not need to transmit data recorded in the entire target data table to the computing node. This reduces an amount of data transmitted by the storage node to the computing node, and helps improve I/O performance between the storage node and the computing node. In addition, the computing node does not need to obtain the target data from the target data table. This reduces a computing load of the computing node, and helps improve index creation efficiency of the computing node and computing performance of the computing node.

In an implementation, the computing node is further configured to: receive an index creation instruction, determine the indication information based on the index creation instruction, and provide the indication information for the storage node. The index creation instruction instructs to create the index based on the target data.

Optionally, after determining the indication information, the computing node may determine, based on the indication information, whether to send the indication information to the storage node, and when it is necessary to obtain the target data through the storage node, provide the indication information for the storage node. In an implementation, the computing node is specifically configured to: when first consumption and second consumption that correspond to the target data meet a specified condition, provide the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

In this application, there may be a plurality of implementations in which the computing node sends the indication information to the storage node. In a possible implementation, the computing node may send the indication information to the storage node in an I/O request manner. For example, the computing node sends a data obtaining request to the storage node. The data obtaining request requests the storage node to provide, for the computing node, the target data indicated by the indication information.

In this application, the target data is partial data in the target data table indicated by the index creation instruction. In an implementation, when data with different attributes is distinguished by using a data row and a data column in a data table, the target data may include data recorded in a specified data unit of the target data table, and the data unit may be a data row or a data column. For example, the target data may be data recorded in a specified data column of the target data table.

Further, the target data includes partial data recorded in the specified data unit of the target data table.

In an implementation, the partial data may be prefix data, intermediate data, suffix data, or data of a specified length in the data recorded in the specified data unit. For example, when a type of the data recorded in the specified data unit is a character string and/or a large object class field, and the index may be created based only on prefix data of the character string and/or the large object class field during index creation, the target data may be prefix data of data recorded in a data row corresponding to a specified data column in the target data table.

When the target data is the partial data recorded in the specified data unit of the target data table indicated by the index creation instruction, the storage node obtains the target data from the target data table, and provides the target data for the computing node, so that an amount of data transmitted by the storage node to the computing node can be further reduced, and a computing load of the computing node can be reduced, to further improve index creation efficiency and computing performance of the computing node.

According to a second aspect, this application provides an index creation method. The method is applied to a database system. The database system includes a computing node and a storage node. The storage node stores a data table, and the data table records a plurality of rows and a plurality of columns of data. The method includes: The storage node determines indication information of target data required for creating an index, where the target data is partial data in a target data table. The storage node obtains the target data from the target data table based on the indication information, and provides the target data for the computing node. The computing node creates the index based on the target data.

Optionally, before the storage node determines the indication information of the target data required for creating the index, the method further includes: The computing node receives an index creation instruction, determines the indication information based on the index creation instruction, and provides the indication information for the storage node. The index creation instruction instructs to create the index based on the target data.

Optionally, that the computing node provides indication information for the storage node includes: When first consumption and second consumption that correspond to the target data meet a specified condition, the computing node provides the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

Optionally, that the computing node provides the indication information for the storage node includes: The computing node sends a data obtaining request to the storage node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

According to a third aspect, this application provides a storage node. The storage node stores a data table, and the data table records a plurality of rows and a plurality of columns of data. The storage node includes: a processing module, configured to determine indication information of target data required for creating an index, where the target data is partial data in a target data table, and the processing module is further configured to obtain the target data from the target data table based on the indication information; and an interaction module, configured to provide the target data for a computing node.

Optionally, the interaction module is further configured to receive the indication information provided by the computing node.

Optionally, the interaction module is specifically configured to receive a data obtaining request sent by the computing node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

According to a fourth aspect, this application provides a computing node. The computing node includes: an interaction module, configured to receive target data sent by a storage node; and a processing module, configured to create an index based on the target data. The target data is partial data in the target data table stored in the storage node, and the target data table records a plurality of rows and a plurality of columns of data.

Optionally, the interaction module is further configured to receive an index creation instruction. The index creation instruction instructs to create the index based on the target data. The processing module is further configured to determine indication information based on the index creation instruction. The interaction module is further configured to provide the indication information for the storage node.

Optionally, the interaction module is specifically configured to: when first consumption and second consumption that correspond to the target data meet a specified condition, provide the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

Optionally, the interaction module is specifically configured to send a data obtaining request to the storage node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

According to a fifth aspect, this application provides an index creation method. The method is applied to a storage node. The storage node stores a data table, and the data table records a plurality of rows and a plurality of columns of data. The method includes: The storage node determines indication information of target data required for creating an index, where the target data is partial data in a target data table. The storage node obtains the target data from the target data table based on the indication information, and provides the target data for a computing node.

Optionally, before the storage node determines the indication information of the target data required for creating the index, the method further includes: The storage node receives the indication information provided by the computing node.

Optionally, that the storage node receives the indication information provided by the computing node includes: The storage node receives a data obtaining request sent by the computing node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

According to a sixth aspect, this application provides an index creation method. The method is applied to a computing node. The method includes: The computing node receives target data sent by a storage node, and creates an index based on the target data. The target data is partial data in a target data table stored in the storage node, and the target data table records a plurality of rows and a plurality of columns of data.

Optionally, before the computing node receives the target data sent by the storage node, the method further includes: The computing node receives an index creation instruction, determines indication information based on the index creation instruction, and provides the indication information for the storage node. The index creation instruction instructs to create the index based on the target data.

Optionally, that the computing node provides the indication information for the storage node includes: When first consumption and second consumption that correspond to the target data meet a specified condition, providing the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

Optionally, that the computing node provides the indication information for the storage node includes: sending a data obtaining request to the storage node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

According to a seventh aspect, this application provides a computing device, including a memory and a processor. The memory stores program instructions, and the processor executes the program instructions to perform the method provided in any one of the fifth aspect and the possible implementations of the fifth aspect of this application, or perform the method provided in any one of the sixth aspect and the possible implementations of the sixth aspect of this application.

According to an eighth aspect, this application provides a computing device cluster, including at least one computing device. Each computing device includes a processor and a memory, and the processor of the at least one computing device is configured to execute instructions stored in the memory of the at least one computing device, so that the computing device cluster performs the method described in any one of the second aspect or the possible implementations of the second aspect of this application.

According to a ninth aspect, this application provides a computer program product including instructions. When the instructions are run by a computing device, the computing device is enabled to perform the method provided in any one of the fifth aspect and the possible implementations of the fifth aspect of this application, or perform the method provided in any one of the sixth aspect and the possible implementations of the sixth aspect of this application.

According to a tenth aspect, this application provides a computer program product including instructions. When the instructions are run by a computing device cluster, the computing device cluster is enabled to perform the method provided in any one of the second aspect and the possible implementations of the second aspect of this application.

According to an eleventh aspect, this application provides a computer-readable storage medium. The computer-readable storage medium is a non-volatile computer-readable storage medium, the computer-readable storage medium includes computer program instructions, and when the computer program instructions are executed by a computing device, the computing device performs the method provided in any one of the fifth aspect and the possible implementations of the fifth aspect of this application, or performs the method provided in any one of the sixth aspect and the possible implementations of the sixth aspect of this application.

According to a twelfth aspect, this application provides a computer-readable storage medium. The computer-readable storage medium is a non-volatile computer-readable storage medium, the computer-readable storage medium includes computer program instructions, and when the computer program instructions are executed by a computing device cluster, the computing device cluster performs the method provided in any one of the second aspect and the possible implementations of the second aspect of this application.

### BRIEF DESCRIPTION OF DRAWINGS

FIG. 1 is a diagram of an implementation environment related to an index creation method according to an embodiment of this application;
FIG. 2 is a diagram of a structure of a database system according to an embodiment of this application;
FIG. 3 is a diagram of a structure of another database system according to an embodiment of this application;
FIG. 4 is a flowchart of an index creation method according to an embodiment of this application;
FIG. 5 is a diagram of a structure of a storage node according to an embodiment of this application;
FIG. 6 is a diagram of a structure of a computing node according to an embodiment of this application;
FIG. 7 is a flowchart of an index creation method implemented by a storage node according to an embodiment of this application;
FIG. 8 is a flowchart of an index creation method implemented by a computing node according to an embodiment of this application;
FIG. 9 is a diagram of a structure of a computing device according to an embodiment of this application; and
FIG. 10 is a diagram of a structure of a computing device cluster according to an embodiment of this application.

### DESCRIPTION OF EMBODIMENTS

To make the objectives, technical solutions, and advantages of this application clearer, the following further describes implementations of this application in detail with reference to the accompanying drawings.

Creating an index for data in a database is a common database definition language operation and is a common operation during operations and maintenance of a database system. Index-based query can speed up query and improves query performance, and is widely used in a scenario in which a user needs to speed up query.

In a current database system, when creating an index for a data table in a database, a computing node needs to read all data in the data table from a storage node, and then create the index based on all the data in the data table.

However, current index creation efficiency is low.

Embodiments of this application provide an index creation method and a database system for implementing the method. The database system includes a computing node and a storage node. The storage node stores a data table, and the data table records a plurality of rows and a plurality of columns of data. In the database system, the storage node is configured to: determine indication information of target data required for creating an index, obtain the target data from a target data table based on the indication information, and provide the target data for the computing node. The computing node is configured to create the index based on the target data. The target data is partial data in the target data table.

In the database system, the storage node obtains, from the target data table, the target data required for creating the index, and provides the target data for the computing node. Compared with a related technology, in the database system, the storage node does not need to transmit data recorded in the entire target data table to the computing node. This reduces an amount of data transmitted by the storage node to the computing node, and helps improve input/output (input/output, I/O) performance between the storage node and the computing node. In addition, the computing node does not need to obtain the target data from the target data table. This reduces a computing load of the computing node, and helps improve index creation efficiency of the computing node and computing performance of the computing node.

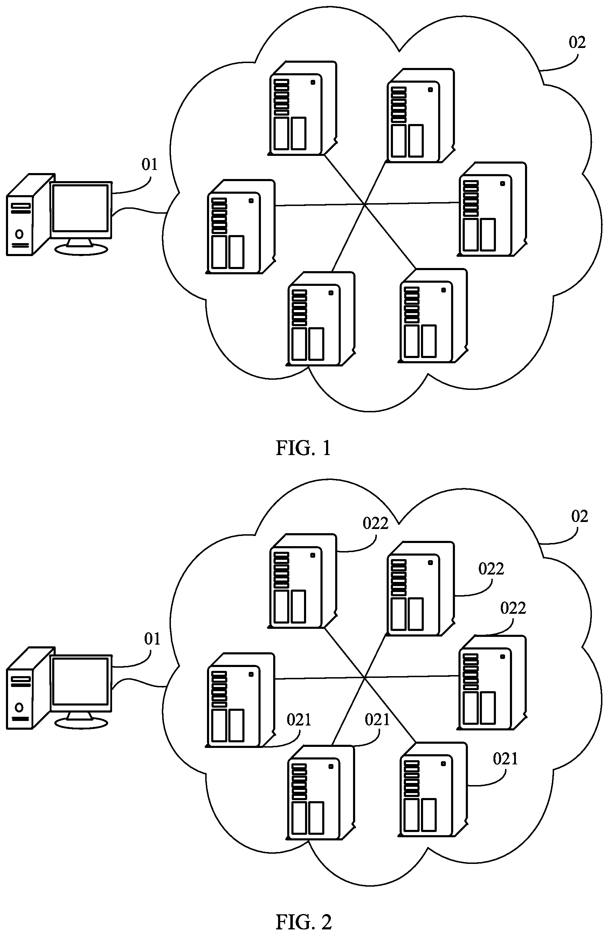

FIG. 1 is a diagram of an implementation environment related to an index creation method according to an embodiment of this application. As shown in FIG. 1, the implementation environment includes a client 01 and a database system 02. The database system 02 records a data table. The client 01 can establish a communication connection to the database system 02. For example, a communication connection may be established between the client 01 and the database system 02 through a network. Optionally, the network may be a local area network, the internet, or another network. This is not limited in embodiments of this application.

A user may interact with the database system 02 through the client 01. In an implementation, the client 01 is configured to send an instruction to the database system 02 according to an indication of the user. For example, an index creation instruction is sent, to instruct the database system to create an index. For another example, a data access instruction is sent, to instruct to perform data access on the database system.

In a possible implementation, the client 01 may be a desktop computer, a laptop computer, a mobile phone, a smartphone, a tablet computer, a multimedia player, a smart home appliance, an artificial intelligence device, a smart wearable device, an e-reader, a smart vehicle-mounted device, an internet of things device, or the like.

The database system 02 is configured to: receive an instruction sent by the client 01, and perform an operation indicated by the instruction. For example, the database system 02 is configured to receive the index creation instruction, and create an index based on the index creation instruction according to the index creation method provided in embodiments of this application. For example, the database system 02 is configured to receive the data access instruction, and perform feedback based on the data access instruction.

In an implementation, the database system 02 may be implemented by using a computing device. In addition, the computing device may be a server (for example, a cloud server). Generally, the database system 02 may be implemented by a server cluster formed by several servers, or by a cloud computing service center. A large quantity of basic resources owned by a cloud service provider are deployed in the cloud computing service center. For example, a computing resource, a storage resource, and a network resource are deployed in the cloud computing service center. The cloud computing service center may implement, by using the large quantity of basic resources, the index creation method provided in embodiments of this application.

When the database system 02 is implemented by using the cloud computing service center, the user can access a cloud platform through the client 01 and use, through the cloud platform, a database service provided by the database system. In this case, a function implemented by the index creation method provided in embodiments of this application may be abstracted by the cloud service provider into an index creation cloud service on the cloud platform, and the cloud platform can provide the index creation cloud service for the user by using a resource in the cloud computing center. After purchasing the index creation cloud service on the cloud platform, the user can create, by using the index creation cloud service, an index for data recorded in the database system, to speed up a data search process. Optionally, the cloud platform may be a cloud platform of a center cloud or a cloud platform of an edge cloud, or include cloud platforms of a center cloud and an edge cloud. This is not specifically limited in embodiments of this application.

It should be noted that, in the implementation environment shown in FIG. 1, the database system 02 may alternatively be implemented by using another resource platform other than the cloud platform. This is not specifically limited in embodiments of this application. In this case, the database system 02 may be implemented by using a resource in the another resource platform, and provide a related database service for the user.

It should be understood that the foregoing content is an example of an application scenario of the index creation method provided in embodiments of this application, and does not constitute a limitation on the application scenario of the index creation method. A person of ordinary skill in the art may learn that, as a service requirement changes, the application scenario of the index creation method may be adjusted based on the application requirement. The application scenario is not listed in embodiments of this application.

FIG. 2 is a diagram of a structure of a database system according to an embodiment of this application. As shown in FIG. 2, a database system 02 includes a computing node 021 and a storage node 022. The storage node 022 stores a data table, and the data table records a plurality of rows and a plurality of columns of data. In an implementation, the computing node 021 and the storage node 022 may be implemented by computing devices in a computing device cluster. In addition, to store data, the computing device cluster is further configured with a storage pool, and the storage pool is configured to store a data table.

In the database system 02 provided in this embodiment of this application, the storage node 022 is configured to determine indication information of target data required for creating an index. The target data is partial data in a target data table. The storage node 022 is further configured to: obtain the target data from the target data table based on the indication information, and provide the target data for the computing node 021. The computing node 021 is configured to create the index based on the target data.

Optionally, the computing node 021 is further configured to: receive an index creation instruction, determine the indication information based on the index creation instruction, and provide the indication information for the storage node 022. The index creation instruction instructs to create the index based on the target data.

Optionally, the computing node 021 is specifically configured to: when first consumption and second consumption that correspond to the target data meet a specified condition, provide the indication information for the storage node 022. The first consumption is consumption generated when the storage node 022 obtains the target data based on the target data table and provides the target data for the computing node 021, and the second consumption is consumption generated when the storage node 022 provides the target data table for the computing node 021 and the computing node 021 obtains the target data based on the target data table.

Optionally, the computing node 021 is specifically configured to send a data obtaining request to the storage node 022. The data obtaining request requests the storage node 022 to provide, for the computing node 021, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

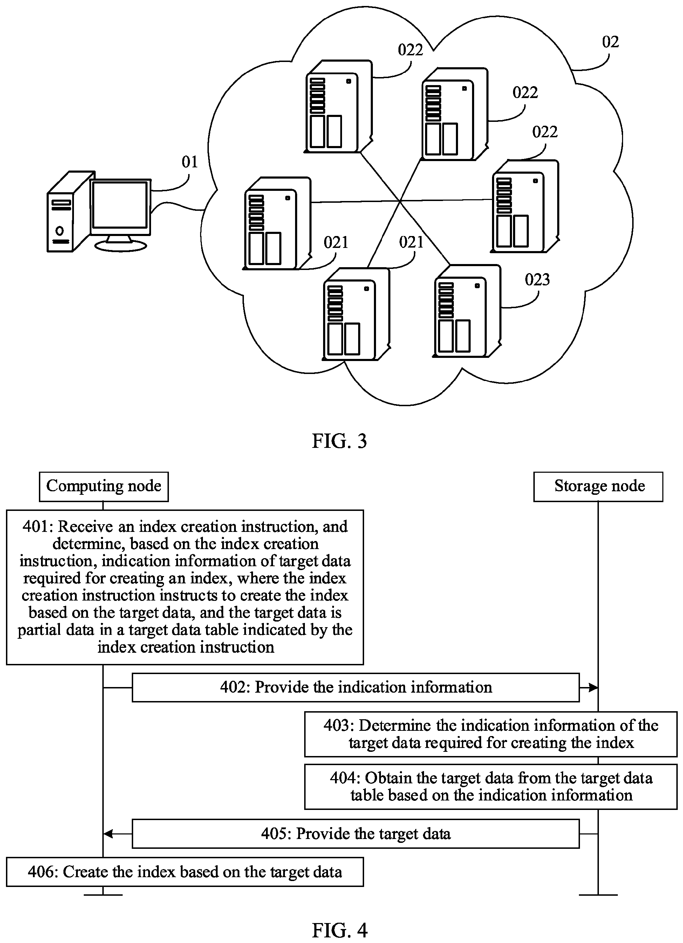

It should be noted that, according to an application requirement, the database system 02 may further include another node, to implement another function or assist in implementing functions of the storage node 022 and the computing node 021. For example, as shown in FIG. 3, the database system 02 may further include a management node 023. The management node 023 is configured to manage the storage node 022 and the computing node 021, to ensure that the database system 02 can run normally.

The storage node 022, the computing node 021, and the management node 023 may all be implemented by using software, or may be implemented by using hardware. For example, the following describes an implementation of the storage node 022. Similarly, for implementations of the computing node 021 and the management node 023, refer to the implementation of the storage node 022.

In an example of a software functional unit, the storage node 022 may include code run on a computing instance. The computing instance may be at least one of computing devices such as a physical host (computing device), a virtual machine, and a container. Further, there may be one or more computing devices. For example, the storage node 022 may include code run on a plurality of hosts/virtual machines/containers. It should be noted that the plurality of hosts/virtual machines/containers configured to run an application may be distributed in a same region (region), or may be distributed in different regions. The plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. VPCs are interconnected through the communication gateway.

In an example of a hardware functional unit, the storage node 022 may include at least one computing device such as a server. Alternatively, the storage node 022 may be a device or the like implemented by using an application-specific integrated circuit (application-specific integrated circuit, ASIC) or a programmable logic device (programmable logic device, PLD). The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the storage node 022 may be distributed in a same region, or may be distributed in different regions. A plurality of computing devices included in the storage node 022 may be distributed in a same AZ, or may be distributed in different AZs. Similarly, the plurality of computing devices included in the storage node 022 may be distributed in a same VPC, or may be distributed in a plurality of VPCs. The plurality of computing devices may be any combination of computing devices such as a server, an ASIC, a PLD, a CPLD, an FPGA, and GAL.

In conclusion, in the database system, the storage node obtains, from the target data table, the target data required for creating the index, and provides the target data for the computing node. Compared with a related technology, in the database system, the storage node does not need to transmit data recorded in the entire target data table to the computing node. This reduces an amount of data transmitted by the storage node to the computing node, and helps improve I/O performance between the storage node and the computing node. In addition, the computing node does not need to obtain the target data from the target data table. This reduces a computing load of the computing node, and helps improve index creation efficiency of the computing node and computing performance of the computing node.

For ease of understanding, the following content describes an implementation process of the index creation method provided in embodiments of this application. However, for convenience and brevity of description herein, an implementation process of the index creation method is not described in detail in related content of the database system. For an implementation process of the index creation method implemented by the database system, refer to corresponding content in the following method embodiments. Details are not described herein again.

The following uses the database system shown in FIG. 2 as an example to describe an implementation process of creating an index by the database system. FIG. 4 is a flowchart of an index creation method performed by the database system according to an embodiment of this application. As shown in FIG. 4, the method includes the following steps.

Step 401: A computing node receives an index creation instruction, and determines, based on the index creation instruction, indication information of target data required for creating an index, where the index creation instruction instructs to create the index based on the target data, and the target data is partial data in a target data table indicated by the index creation instruction.

When a user needs to create an index for data in a database, the user may perform a specified operation on a client used by the user, to trigger the index creation instruction, and instruct to create the index according to the index creation instruction. After generating the index creation instruction based on the operation of the user, the client sends the index creation instruction to the database, and the computing node may receive the index creation instruction.

The index is created in the database to facilitate data search in the database. The index creation instruction indicates the data based on which the index needs to be created. The indication may be indicated by the indication information. The computing node may obtain the indication information based on the index creation instruction, to obtain the indication information of the target data required for creating the index. In an implementation, the index creation instruction may carry the indication information, and the computing node may extract the indication information from the index creation instruction. For example, the index creation instruction may be ALTER TABLE t1 ADD KEY(a, c). The index creation instruction instructs to create an index based on a data column a and a data column c of a data table t1. That is, the indication information indicates data in the data column a and the data column c of the data table t1. In this case, the computing node may extract the indication information from the index creation instruction.

It should be noted that, in some scenarios, the index needs to be created based on primary key data in the data table, and data indicated by the index creation instruction may include or may not include the primary key data. When the index needs to be created based on the primary key data in the data table, and the index creation instruction does not indicate the primary key data, after receiving the index creation instruction, the computing node may further determine, based on the data indicated by the index creation instruction, the primary key data required for creating the index, and use the indication information to carry information indicating the primary key data. Still in the foregoing example, the index creation instruction is ALTER TABLE t1 ADD KEY(a, c), and the index creation instruction instructs to create the index based on the data column a and the data column c of the data table t1. However, in this scenario, the index needs to be created based on primary key data of the data table t1, and a data column d of the data table t1 records the primary key data of the data table t1. In this case, the indication information obtained by the computing node not only indicates the data in the data column a and the data column c of the data table t1, but also indicates data in the data column d.

It should be further noted that this embodiment of this application may also be applicable to a scenario in which the primary key data is not required for creating the index. For example, in some scenarios, the index may be created based on some identification information instead of the primary key data. In this case, this embodiment of this application is also applicable to these scenarios.

In this embodiment of this application, the target data is partial data in the target data table indicated by the index creation instruction. In an implementation, when data with different attributes is distinguished by using a data row and a data column in a data table, the target data may include data recorded in a specified data unit of the target data table, and the data unit may be a data row or a data column. For example, refer to the foregoing two examples. The target data may be the data recorded in the specified data column of the target data table.

Further, the target data may specifically include partial data recorded in the specified data unit of the target data table. In an implementation, the partial data may be prefix data, intermediate data, suffix data, or data of a specified length in the data recorded in the specified data unit. For example, when a type of the data recorded in the specified data unit is a character string and/or a large object class field, and the index may be created based only on prefix data of the character string and/or the large object class field during index creation, the target data may be prefix data of data recorded in a data row corresponding to a specified data column in the target data table. For example, the index creation instruction may be ALTER TABLE t1 ADD KEY(a(10), c). The index creation instruction instructs to create an index based on the data column c and prefix data with a length of 10 in a data row corresponding to the data column a of the data table t1. That is, the indication information indicates the prefix data with a length of 10 in the data row corresponding to the data column a and data in the data column c of the data table t1.

When the target data is the partial data recorded in the specified data unit of the target data table indicated by the index creation instruction, a storage node obtains the target data from the target data table, and provides the target data for the computing node, so that an amount of data transmitted by the storage node to the computing node can be further reduced, and a computing load of the computing node can be reduced, to further improve index creation efficiency and computing performance of the computing node.

Step 402: The computing node provides the indication information for the storage node.

After obtaining the indication information, the computing node may provide the indication information for the storage node, so that the storage node provides, for the computing node, the target data indicated by the indication information. Alternatively, after determining the indication information, the computing node may determine, based on the indication information, whether to send the indication information to the storage node, and when it is necessary to obtain the target data through the storage node, provide the indication information for the storage node. In an implementation, the computing node may obtain first consumption and second consumption that correspond to the target data, and send the indication information to the storage node when the first consumption and the second consumption meet a specified condition. When the first consumption and the second consumption do not meet the specified condition, the computing node does not send the indication information to the storage node, but requests the storage node to provide, for the computing node, the entire target data table recording the target data. The first consumption is consumption generated when the storage node obtains the target data based on the target data table and provides the target data for the computing node, and the second consumption is consumption generated when the storage node provides the target data table for the computing node and the computing node obtains the target data based on the target data table. The specified condition may be determined according to an application requirement. For example, the specified condition may be that the first consumption is less than the second consumption. For another example, considering that obtaining the target data by the computing node from the target data table occupies a computing resource of the computing node, to ensure computing performance of the computing node, the specified condition may be that a difference between the second consumption and the first consumption is greater than a specified threshold.

In this embodiment of this application, there may be a plurality of implementations in which the computing node sends the indication information to the storage node. In a possible implementation, the computing node may send the indication information to the storage node in an I/O request manner. For example, the computing node sends a data obtaining request to the storage node. The data obtaining request requests the storage node to provide, for the computing node, the target data indicated by the indication information. In an implementation scenario, the storage node may support a near data processing (near data processing, NDP) technology, and the computing node and the storage node may communicate with each other through an NDP context structure. After determining the indication information, the computing node may construct the NDP context structure based on the indication information, to transfer the indication information through the NDP context structure. In this case, the data obtaining request may include the NDP context structure and content that indicates the storage node to initiate full-table scanning on the target data table.

Step 403: The storage node determines the indication information of the target data required for creating the index.

After receiving the indication information, the storage node may obtain, based on the indication information, the target data from the target data table indicated by the indication information, and provide the target data for the computing node. For example, when the data obtaining request sent by the computing node includes the NDP context structure and the content that indicates the storage node to initiate full-table scanning on the target data table, after receiving the data obtaining request, the storage node may obtain the indication information from the NDP context structure, and determine that full-table scanning needs to be performed on the target data table and obtain the target data.

Step 404: The storage node obtains the target data from the target data table based on the indication information.

After obtaining the indication information, the storage node may perform full-table scanning on the target data table indicated by the indication information, and traverse data rows and data columns in each related page of the target data table, to obtain the target data. For example, the storage node may obtain the target data from the target data table by using the NDP technology. Generally, the NDP technology is used in database selection (SELECT) and data manipulation language (data manipulation language, DML) scenarios. However, whether the NDP technology can be used in the SELECT and DML scenarios depends on structured query languages (structured query language, SQL) used in these scenarios. However, in this embodiment of this application, as long as the storage node can support the NDP technology, the storage node can obtain the target data from the target data table by using the NDP technology without considering too many factors. A rate of a usage scenario coverage of the NDP technology is basically 100%, and I/O in a data table reading phase can be greatly reduced. This effect is particularly apparent in a scenario in which a plurality of users share a storage resource and a computing resource (a multi-tenant scenario of a cloud platform).

An operation of obtaining, by the storage node, the target data from the target data table may be referred to as a pruning operation on the target data table. For example, when the target data is data recorded in a specified data column of the target data table, an operation of obtaining the target data from the target data table may be referred to as a column pruning operation. When the target data is prefix data of data recorded in a data row of the target data table, the operation of obtaining the target data from the target data table may be referred to as a column content pruning operation. The storage node performs a pruning operation on the target data table to obtain the target data, and provides the target data for the computing node. This can reduce an amount of data transmitted by the storage node to the computing node, reduce an I/O amount between the storage node and the computing node, reduce I/O overheads between the storage node and the computing node, and implement precise I/O between the storage node and the computing node. These effects are especially apparent when the target data is obtained through column content pruning.

Step 405: The storage node provides the target data for the computing node.

After obtaining the target data, the storage node may store the target data in a data structure, and provide the data structure for the computing node, so that the computing node obtains the target data. After obtaining the target data from each page of the target data table through the pruning operation, the storage node may provide a pruned page for the data node. The pruned page may be considered as a compressed page of an original page. However, a compressed page obtained through the pruning operation provided in this embodiment of this application is different from a compressed page obtained through a compression technology. For example, the data in the compressed page obtained through pruning includes only data in a data unit specified by the indication information, and the compressed page obtained through compression may further include data in another data unit. For another example, a compression rate of the compressed page obtained through pruning relative to the target data table can be apparently greater than a compression rate of the compressed page obtained through the compression technology.

Step 406: The computing node creates the index based on the target data.

After obtaining the target data provided by the storage node, the computing node may create the index based on the target data. For example, when the target data is the data recorded in the specified data column of the target data table, after obtaining the target data, the computing node may read, from each data row of the target data, data recorded in each data column, form a sub-record based on data recorded in each data row and each data column for independent storage, then sort all the sub-records, and perform an index creation operation based on the sorted sub-records. In an implementation, the index may be stored in a data structure such as a B-tree. In addition, when the target data is the data recorded in the specified data column of the target data table, and the target data is presented in a form of a compressed page, the computing node may parse a data row of the compressed page after receiving the compressed page sent by the storage node, to obtain the target data. The computing node obtains the target data from the storage node, and the computing node does not need to obtain the target data from the target data table. This reduces a computing load of the computing node, and helps improve index creation efficiency of the computing node and computing performance of the computing node.

The following uses an example to describe benefits generated by the index creation method.

It is assumed that the data table t1 includes 24 data columns, which are respectively data columns a, b, c, ..., and x. Lengths of character strings stored in the data column a and the data column b are 100 bytes, lengths of character strings stored in other data columns are 4, and data recorded in the data column c is primary key data. The index creation instruction is ALTER TABLE t1 ADD KEY(a(10), c). That is, the index creation instruction instructs to create an index based on the data column c and prefix data with a length of 10 in the data column a of the data table t1.

According to a related technology, the computing node needs to read the entire data table t1 from the storage node, and for each data row, a quantity of bytes that need to be read is approximately 100+100+4x22=288. In this process, to obtain the data column c and the prefix data with a length of 10 in the data column a of the data table t1, the computing node needs to additionally read the data columns b, d, e, ..., and x and the 11^{th} to the 100^{th} bytes in the data column a. When a large quantity of data rows need to be read, for example, data recorded in 1 billion data rows needs to be read, an I/O amount reaches at least 288x1000000000=288G.

When the index creation method provided in this embodiment of this application is used, the storage node may remove, by column pruning, the data columns b, d, e, ..., x from the data table t1, to obtain the target data recorded in the data columns a and c. For each data row, a total length of the target data is 100+4=104 bytes. When a large quantity of data rows need to be read, for example, data recorded in 1 billion data rows needs to be read, an I/O amount reaches at least 104x1000000000=104G.

Even, the storage node may remove, by column pruning and column content pruning, the data columns b, d, e, ..., x, and the 11^{th} to the 100^{th} bytes in the data column a from the data table t1, and obtain target data recorded in the data column c and the prefix data with a length of 10 in the data column a. For each data row, a total length of the target data is 10+4=14 bytes. When a large quantity of data rows need to be read, for example, data recorded in 1 billion data rows needs to be read, an I/O amount reaches at least 14x1000000000=14G.

It can be learned from the foregoing content that, through optimization by column pruning, an amount of data transmitted by the storage node in each data row may be reduced from 288 bytes to 104 bytes, and a reduced I/O amount may reach (288-104)/288=63.89%. Through optimization by column pruning and column content pruning, an amount of data transmitted by the storage node in each data row may be reduced from 288 bytes to 14 bytes, and a reduced I/O amount may even reach (288-14)/288=95.14%.

In addition, when a width of the data table is wider, for example, fields recorded in the data table are more complex, and the data table includes more data columns, an I/O amount that can be reduced by using the optimization manner provided in this embodiment of this application is larger. It should be noted that, in the foregoing comparison, header information of the data row is not included. A data amount of the header information is usually small, and a data amount (for example, 6 bytes to 8 bytes) can be reduced by performing column pruning or column content pruning on the header information. Therefore, even if the header information is included, a good effect can still be achieved through the optimization.

In conclusion, in the index creation method provided in this embodiment of this application, the storage node is configured to: determine the indication information of the target data required for creating the index, obtain the target data from the target data table based on the indication information, and provide the target data for the computing node. The computing node is configured to create the index based on the target data. The target data is partial data in the target data table. In the database system, the storage node obtains, from the target data table, the target data required for creating the index, and provides the target data for the computing node. Compared with a related technology, in the database system, the storage node does not need to transmit data recorded in the entire target data table to the computing node. This reduces an amount of data transmitted by the storage node to the computing node, and helps improve I/O performance between the storage node and the computing node. In addition, the computing node does not need to obtain the target data from the target data table. This reduces a computing load of the computing node, and helps improve index creation efficiency of the computing node and computing performance of the computing node.

In addition, in a scenario in which a plurality of users share a storage resource and a computing resource, because the plurality of users share a storage node and a computing node, index creation operations of some users directly affect I/O experience and computing performance of another user. Therefore, effect of the optimization manner provided in this embodiment of this application is more apparent in this sharing scenario.

It should be noted that a sequence of steps of the index creation method provided in this embodiment of this application may be appropriately adjusted, or steps may be correspondingly added or deleted based on a situation. Any variation method readily figured out by a person skilled in the art within the technical scope disclosed in this application shall fall within the protection scope of this application. Therefore, details are not described.

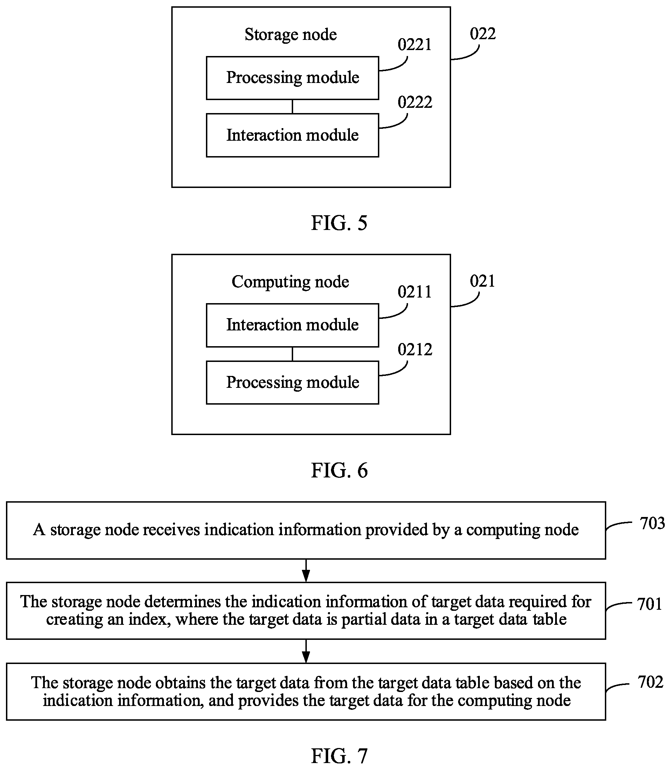

An embodiment of this application further provides a storage node. The storage node stores a data table, and the data table records a plurality of rows and a plurality of columns of data. As shown in FIG. 5, the storage node 022 includes:
a processing module 0221, configured to determine indication information of target data required for creating an index, where the target data is partial data in a target data table, and
the processing module 0221 is further configured to obtain the target data from the target data table based on the indication information; and
an interaction module 0222, configured to provide the target data for a computing node.

Optionally, the interaction module 0222 is further configured to receive the indication information provided by the computing node.

Optionally, the interaction module 0222 is specifically configured to receive a data obtaining request sent by the computing node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

An embodiment of this application further provides a computing node. As shown in FIG. 6, the computing node 021 includes:
an interaction module 0211, configured to receive target data sent by a storage node, where the target data is partial data in a target data table stored in the storage node, and the target data table records a plurality of rows and a plurality of columns of data; and
a processing module 0212, configured to create an index based on the target data.

Optionally, the interaction module 0211 is further configured to receive an index creation instruction. The index creation instruction instructs to create the index based on the target data. The processing module 0212 is further configured to determine the indication information based on the index creation instruction. The interaction module 0211 is further configured to provide the indication information for the storage node.

Optionally, the interaction module 0211 is specifically configured to: when first consumption and second consumption that correspond to the target data meet a specified condition, provide the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

Optionally, the interaction module 0211 is specifically configured to send a data obtaining request to the storage node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

The processing module 0221, the interaction module 0222, the interaction module 0211, and the processing module 0212 may all be implemented by using software, or may be implemented by using hardware. For example, the following uses the processing module 0221 as an example to describe an implementation of the processing module 0221. Similarly, for implementations of the interaction module 0222, the interaction module 0211, and the processing module 0212, refer to the implementation of the processing module 0221.

The module is used as an example of a software functional unit, and the processing module 0221 may include code run on a computing instance. The computing instance may include at least one of a physical host (computing device), a virtual machine, and a container. Further, there may be one or more computing instances. For example, the processing module 0221 may include code run on a plurality of hosts/virtual machines/containers. It should be noted that the plurality of hosts/virtual machines/containers configured to run the code may be distributed in a same region, or may be distributed in different regions. Further, the plurality of hosts/virtual machines/containers configured to run the code may be distributed in a same AZ, or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. VPCs are interconnected through the communication gateway.

A module is used as an example of a hardware functional unit, and the processing module 0221 may include at least one computing device such as a server. Alternatively, the processing module 0221 may be a device implemented by using an ASIC or a PLD, or the like. The PLD may be implemented by a CPLD, an FPGA, GAL, or any combination thereof.

A plurality of computing devices included in the processing module 0221 may be distributed in a same region, or may be distributed in different regions. The plurality of computing devices included in the processing module 0221 may be distributed in a same AZ, or may be distributed in different AZs. Similarly, the plurality of computing devices included in the processing module 0221 may be distributed in a same VPC, or may be distributed in a plurality of VPCs. The plurality of computing devices may be any combination of computing devices such as a server, an ASIC, a PLD, a CPLD, an FPGA, and GAL.

It should be noted that in another embodiment, the processing module 0221 may be configured to perform any step performed by the storage node in the index creation method, the interaction module 0222 may be configured to perform any step performed by the storage node in the index creation method, the interaction module 0211 may be configured to perform any step performed by the computing node in the index creation method, and the processing module 0212 may be configured to perform any step performed by the computing node in the index creation method. Steps implemented by the processing module 0221, the interaction module 0222, the interaction module 0211, and the processing module 0212 may be specified as required. The processing module 0221 and the interaction module 0222 each implement different steps in the index creation method to implement all functions of the storage node, and the interaction module 0211 and the processing module 0212 each implement different steps in the index creation method to implement all functions of the computing node.

An embodiment of this application further provides an index creation method. The method is applied to a storage node. The storage node stores a data table, and the data table records a plurality of rows and a plurality of columns of data. As shown in FIG. 7, the method includes the following steps.

Step 701: The storage node determines indication information of target data required for creating an index, where the target data is partial data in a target data table.

Step 702: The storage node obtains the target data from the target data table based on the indication information, and provides the target data for a computing node.

Optionally, as shown in FIG. 7, before the storage node determines the indication information of the target data required for creating the index, the method further includes: Step 703: The storage node receives the indication information provided by the computing node.

Optionally, that the storage node receives the indication information provided by the computing node includes: The storage node receives a data obtaining request sent by the computing node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

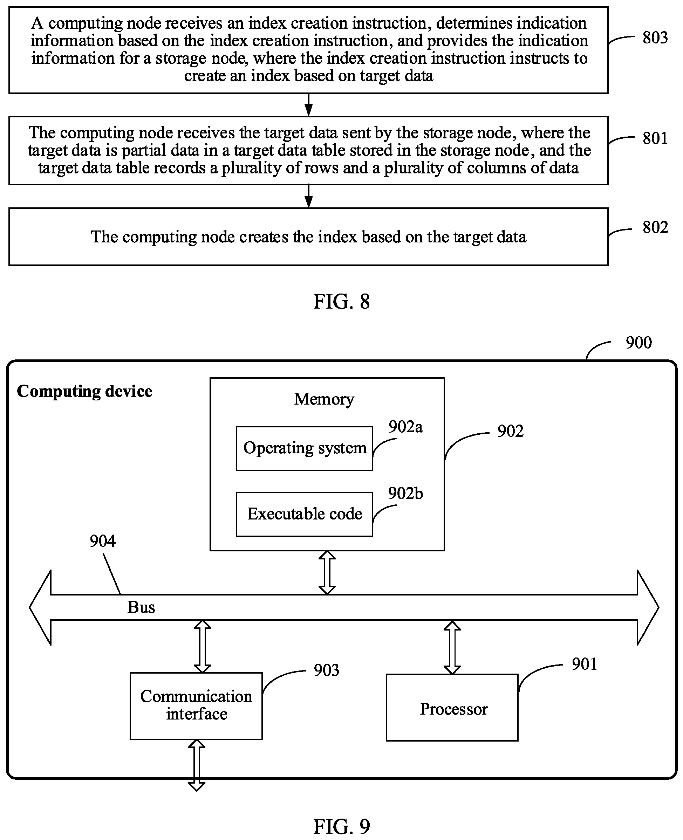

An embodiment of this application further provides an index creation method. The method is applied to a computing node. As shown in FIG. 8, the method includes the following steps.

Step 801: The computing node receives target data sent by a storage node, where the target data is partial data in a target data table stored in the storage node, and the target data table records a plurality of rows and a plurality of columns of data.

Step 802: The computing node creates an index based on the target data.

Optionally, as shown in FIG. 8, before the computing node receives the target data sent by the storage node, the method further includes: Step 803: The computing node receives an index creation instruction, determines indication information based on the index creation instruction, and provides the indication information for the storage node. The index creation instruction instructs to create the index based on the target data.

Optionally, that the computing node provides the indication information for the storage node includes: When first consumption and second consumption that correspond to the target data meet a specified condition, providing the indication information for the storage node. The first consumption is consumption generated when the storage node obtains the target data based on the target data table and provides the target data for the computing node, and the second consumption is consumption generated when the storage node provides the target data table for the computing node and the computing node obtains the target data based on the target data table.

Optionally, that the computing node provides the indication information for the storage node includes: sending a data obtaining request to the storage node. The data obtaining request requests the storage node to provide, for the computing node, the target data indicated by the indication information.

Optionally, the target data includes data recorded in a specified data unit of the target data table, and the data unit is a data row or a data column.

Optionally, the target data includes partial data recorded in the specified data unit of the target data table.

Optionally, the partial data is prefix data, intermediate data, suffix data, or data of a specified length in the data recorded in the specified data unit.

Optionally, a type of the data recorded in the specified data unit is a character string and/or a large object class field.

It can be clearly understood by a person skilled in the art that, for the purpose of convenient and brief description, for detailed working processes of the foregoing nodes and modules, refer to corresponding content in the foregoing method embodiments. Details are not described herein again.

An embodiment of this application provides a computing device. The computing device is configured to implement some or all functions of the storage node or the computing node in the index creation method provided in embodiments of this application. FIG. 9 is a diagram of a structure of a computing device according to an embodiment of this application. As shown in FIG. 9, the computing device 900 includes a processor 901, a memory 902, a communication interface 903, and a bus 904. The processor 901, the memory 902, and the communication interface 903 are communicatively connected to each other through the bus 904. The computing device 900 may be a server or a terminal device. It should be understood that a quantity of processors and a quantity of memories in the computing device 900 are not limited in this application.

The processor 901 may include a general-purpose processor and/or a dedicated hardware chip. The general-purpose processor may include any one or more of processors such as a central processing unit (central processing unit, CPU), a microprocessor (microprocessor, MP), or a graphics processing unit (graphics processing unit, GPU). For example, the CPU is a single-core processor (single-CPU), or a multi-core processor (multi-CPU). The dedicated hardware chip is a hardware module capable of performing high-performance processing. The dedicated hardware chip includes at least one of a digital signal processor (digital signal processor, DSP), an application-specific integrated circuit (application-specific integrated circuit, ASIC), a field-programmable logic gate array (field-programmable logic gate array, FPGA), or a network processor (network processor, NP). The processor 901 may alternatively be an integrated circuit chip and has a signal processing capability. In an implementation process, some or all functions of the index creation method in this application may be implemented by using an integrated logic circuit of hardware in the processor 901 or instructions in a form of software.

The memory 902 is configured to store a computer program, and the computer program includes an operating system 902a and executable code (namely, program instructions) 902b. For example, the memory 902 is a read-only memory, another type of static storage device that can store static information and instructions, a random access memory, another type of dynamic storage device that can store information and instructions, an electrically erasable programmable read-only memory, a compact disc read-only memory, other optical disk storage, optical disc storage (including a compact disc, a laser disc, an optical disc, a digital versatile disc, a Blu-ray disc, or the like), a magnetic disk storage medium, another magnetic storage device, or any other medium that can be used to carry or store expected executable code in a form of instructions or a data structure and that can be accessed by a computer. However, the memory is not limited thereto. For example, the memory 902 is configured to store an egress queue. For example, the memory 902 exists independently, and is connected to the processor 901 through the bus 904. Alternatively, the memory 902 and the processor 901 are integrated together. For example, the memory 902 may include a volatile memory (volatile memory), for example, a random access memory (random access memory, RAM). The processor 901 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 902 may store executable code. When the executable code stored in the memory 902 is executed by the processor 901, the processor 901 is configured to implement functions of the foregoing storage node, to implement some or all functions of the storage node in the index creation method provided in embodiments of this application. That is, the memory 902 stores instructions for implementing some or all functions of the storage node in the index creation method. Alternatively, the processor 901 is configured to implement functions of the foregoing computing node, to implement some or all functions of the computing node in the index creation method provided in embodiments of this application. That is, the memory 902 stores instructions for implementing some or all functions of the computing node in the index creation method. For an implementation of performing the process by the processor 901, refer to related descriptions in the foregoing embodiments. The memory 902 may further include another software module, such as an operating system, or data for running a process.

The communication interface 903 uses a transceiver module, for example, but not limited to, a network interface card or a transceiver, to implement communication between the computing device and another device or a communication network. For example, the communication interface 903 may be any one or any combination of the following components with a network access function: a network interface (for example, an Ethernet interface) or a wireless network adapter.

The bus 904 is any type of communication bus configured to implement interconnection between internal components (for example, the memory 902, the processor 901, and the communication interface 903) in the computing device. For example, the bus 904 may be a peripheral component interconnect (peripheral component interconnect, PCI) bus, or an extended industry standard architecture (extended industry standard architecture, EISA) bus. The bus may be classified into an address bus, a data bus, a control bus, and the like. For ease of representation, only one line is for representing the bus in FIG. 9, but this does not mean that there is only one bus or only one type of bus. The bus 904 may include a path for transmitting information between components (for example, the memory 902, the processor 901, and the communication interface 903) of the computing device 900. In this embodiment of this application, an example in which the foregoing components in the computing device are interconnected through the bus 904 is used for description. Optionally, the foregoing components in the computing device 900 may be communicatively connected to each other in another connection manner other than the bus 904. For example, the foregoing components in the computing device 900 are interconnected through an internal logic interface.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. Descriptions of procedures corresponding to the foregoing accompanying drawings have respective focuses. For a part that is not described in detail in a procedure, refer to related descriptions of other procedures.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

Optionally, for a structure of the at least one computing device included in the computing device cluster, refer to the computing device 900 shown in FIG. 9. A memory 902 in one or more computing devices 900 in the computing device cluster may store same instructions for performing the index creation method.

In some possible implementations, the memories 902 in the one or more computing devices 900 in the computing device cluster each may alternatively store some instructions for performing the index creation method. In other words, a combination of the one or more computing devices 900 may jointly execute instructions for performing the index creation method.

It should be noted that the memories 902 in different computing devices 900 in the computing device cluster may store different instructions, which are respectively used to implement a part of functions of the index creation method. That is, the instructions stored in the memories 902 in different computing devices 900 may implement functions of one or more modules in the storage node and the computing node.

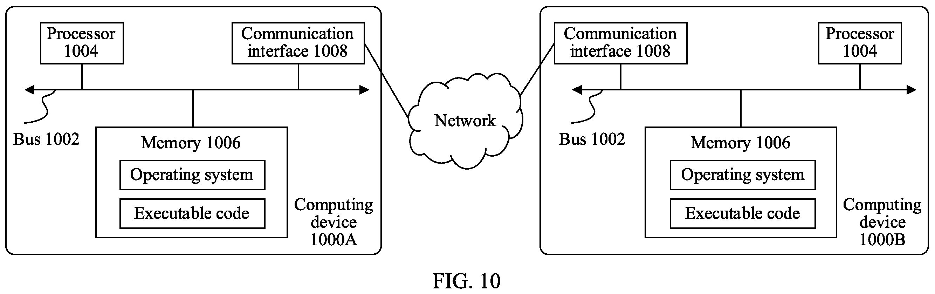

In some possible implementations, the one or more computing devices in the computing device cluster may be connected through a network. The network may be a wide area network, a local area network, or the like. FIG. 10 shows a possible implementation. As shown in FIG. 10, two computing devices 1000A and 1000B are connected through a network. Specifically, each computing device is connected to the network through a communication interface of the computing device. In this possible implementation, the computing devices 1000A and 1000B include a bus 1002, a processor 1004, a memory 1006, and a communication interface 1008. The memory 1006 in the computing device 1000A stores instructions for implementing a function of the storage node. In addition, the memory 1006 in the computing device 1000B stores instructions for implementing a function of the computing node.

A connection manner between computing device clusters shown in FIG. 10 may be that, in consideration of a requirement that target data and indication information need to be transmitted in the index creation method provided in this application, it is considered that a function implemented by a storage node is performed by the computing device 1000A, and a function implemented by a computing node is performed by the computing device 1000B.

It should be understood that a function of the computing device 1000A shown in FIG. 10 may alternatively be completed by a plurality of computing devices 1000. Similarly, a function of the computing device 1000B may alternatively be completed by a plurality of computing devices 1000.

An embodiment of this application further provides a computer-readable storage medium. The computer-readable storage medium is a non-volatile computer-readable storage medium. The computer-readable storage medium may be any usable medium that can be stored by a computing device, or a data storage device such as a data center including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the index creation method provided in embodiments of this application.

An embodiment of this application further provides a computer program product including instructions. The computer program product may be a software or program product that includes instructions and that can be run on a computing device or stored in any usable medium. When the computer program product runs on at least one computing device, the computer is enabled to implement the index creation method provided in embodiments of this application.

An embodiment of this application further provides a chip, including a processor, configured to invoke, from a memory, and run instructions stored in the memory, so that a computing device in which the chip is installed performs the index creation method provided in embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions provided in this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (Solid-State Drive)), or the like.

To clearly describe the interchangeability of hardware and software, the steps and composition of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable rule search apparatus, so that when the program code is executed by the computer or the another programmable rule search apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into modules is merely division of logic functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented by some interfaces, devices, or modules, or may be electrical, mechanical, or other forms of connection.

The modules described as separate components may or may not be physically separate, and components displayed as modules may or may not be physical modules, in other words, may be located in one place or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

Terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of the various examples, a first link may be referred to as a second link, and similarly, the second link may be referred to as the first link.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of" in this application means two or more. For example, a plurality of second packets means two or more second packets. The terms "system" and "network" are often used interchangeably in this specification.

It should be understood that the terms used in the descriptions of various examples in this specification are merely intended to describe specific examples but are not intended to constitute a limitation. The terms "one" ("a" and "an") and "the" of singular forms used in the descriptions of the various examples and the appended claims are also intended to include plural forms, unless otherwise specified in the context clearly.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should also be understood that, depending on the context, the phrase "if it is determined..." or "if [a stated condition or event] is detected" may be interpreted to mean "once determining" or "in response to determining ..." or "once detecting [the stated condition or event] "or "in response to the detection of [the stated condition or event]".

It should be understood that determining B based on A does not mean that B is determined based only on A, and B may alternatively be determined based on A and/or other information.

It should be further understood that "an embodiment", "one embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the indication information, the target data, and the like in this application are all obtained in a case of full authorization.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A database system, wherein the database system comprises a computing node and a storage node, the storage node stores a data table, and the data table records a plurality of rows and a plurality of columns of data;
the storage node is configured to determine indication information of target data required for creating an index, wherein the target data is partial data in a target data table;
the storage node is further configured to: obtain the target data from the target data table based on the indication information, and provide the target data for the computing node; and
the computing node is configured to create the index based on the target data.

2. The system according to claim 1, wherein
the computing node is further configured to receive an index creation instruction, determine the indication information based on the index creation instruction, and provide the indication information for the storage node, wherein the index creation instruction instructs to create the index based on the target data.

3. The system according to claim 2, wherein
the computing node is specifically configured to: when first consumption and second consumption that correspond to the target data meet a specified condition, provide the indication information for the storage node, wherein the first consumption is consumption generated when the storage node obtains the target data based on the target data table and provides the target data for the computing node, and the second consumption is consumption generated when the storage node provides the target data table for the computing node and the computing node obtains the target data based on the target data table.

4. The system according to claim 2 or 3, wherein
the computing node is specifically configured to send a data obtaining request to the storage node, wherein the data obtaining request requests the storage node to provide, for the computing node, the target data indicated by the indication information.

5. The system according to any one of claims 1 to 4, wherein the target data comprises data recorded in a specified data unit of the target data table, and the data unit is a data row or a data column.

6. The system according to claim 5, wherein the target data comprises partial data recorded in the specified data unit of the target data table.

7. The system according to claim 6, wherein the partial data is prefix data, intermediate data, suffix data, or data of a specified length in the data recorded in the specified data unit.

8. The system according to claim 6 or 7, wherein a type of the data recorded in the specified data unit is a character string and/or a large object class field.

9. An index creation method, wherein the method is applied to a database system, the database system comprises a computing node and a storage node, the storage node stores a data table, the data table records a plurality of rows and a plurality of columns of data, and the method comprises:
determining, by the storage node, indication information of target data required for creating an index, wherein the target data is partial data in a target data table;
obtaining, by the storage node, the target data from the target data table based on the indication information, and providing the target data for the computing node; and
creating, by the computing node, the index based on the target data.

10. The method according to claim 9, wherein before the determining, by the storage node, indication information of target data required for creating an index, the method further comprises:
receiving, by the computing node, an index creation instruction, determining the indication information based on the index creation instruction, and providing the indication information for the storage node, wherein the index creation instruction instructs to create the index based on the target data.

11. The method according to claim 10, wherein the providing, by the computing node, the indication information for the storage node comprises:
when first consumption and second consumption that correspond to the target data meet a specified condition, providing, by the computing node, the indication information for the storage node, wherein the first consumption is consumption generated when the storage node obtains the target data based on the target data table and provides the target data for the computing node, and the second consumption is consumption generated when the storage node provides the target data table for the computing node and the computing node obtains the target data based on the target data table.

12. The method according to claim 10 or 11, wherein the providing, by the computing node, the indication information for the storage node comprises:
sending, by the computing node, a data obtaining request to the storage node, wherein the data obtaining request requests the storage node to provide, for the computing node, the target data indicated by the indication information.

13. The method according to any one of claims 9 to 12, wherein the target data comprises data recorded in a specified data unit of the target data table, and the data unit is a data row or a data column.

14. The method according to claim 13, wherein the target data comprises partial data recorded in the specified data unit of the target data table.

15. The method according to claim 14, wherein the partial data is prefix data, intermediate data, suffix data, or data of a specified length in the data recorded in the specified data unit.

16. The method according to claim 14 or 15, wherein a type of the data recorded in the specified data unit is a character string and/or a large object class field.

17. A computing device cluster, comprising at least one computing device, wherein each computing device comprises a processor and a memory, and the processor of the at least one computing device is configured to execute instructions stored in the memory of the at least one computing device, to enable the computing device cluster to perform the method according to any one of claims 9 to 16.

18. A computer program product comprising instructions, wherein when the instructions are run by a computing device cluster, the computing device cluster is enabled to perform the method according to any one of claims 9 to 16.

19. A computer-readable storage medium, comprising computer program instructions, wherein when the computer program instructions are executed by a computing device cluster, the computing device cluster performs the method according to any one of claims 9 to 16.
